# EUROPEAN PATENT APPLICATION

(11) **EP 2 602 171 A1**
(43) Date of publication of application: **12.06.2013**
(21) Application number: 11192061.7
(22) Date of filing: 06.12.2011
(51) Int. Cl.: B62D 1/187, B62D 1/19

(54) **Crash deformation steering column**

(71) Applicant: Autoliv Development AB, 447 83 Vårgårda (SE)
(72) Inventor: Hallenbert, Lennart, SE-44793 Vargarda (SE); Rydsmo, Erik, SE-466 95 Sollrbrunn (SE)
(74) Representative: Beattie, Alex Thomas Stewart

(57) **Abstract**

A steering column arrangement (1) comprising: a housing (2); a steering column mounting arrangement (5), rotatably mounted with respect to the housing (2) about a pivot axis (4); a grip arrangement (7); and an adjustment element (8) having a first region (9) which is formed around the pivot axis (4) and is constrained to rotate with the steering column mounting arrangement (5), and a second portion (12) which is gripped by the grip arrangement (7), there being a deformation arrangement (16) provided between the first and second regions, which may deform to allow the first region (9) to rotate about the rotation axis (4), without rotation of the second region (12).

## Description

### Description of Invention

This invention relates to a steering column arrangement, and in particular concerns a steering column that may allow some movement of the steering wheel during a crash situation.

One of the most frequent types of collision in which a motor vehicle may be involved is a head-on collision. There have been significant advances in technology relating to frontal airbags which, when a crash situation is determined to be occurring or highly likely, inflate between a driver or passenger of a vehicle and the dashboard. As the driver or passenger is thrown forwardly relative to the vehicle by the impact of the crash, the airbag serves to reduce the momentum of the driver or passenger relatively gradually, and to prevent the driver or passenger striking the dashboard with excessive force.

The steering wheel of a vehicle presents a particular hazard for the driver of the vehicle, however. Not only does the presence of the steering wheel significantly reduce the distance over which the driver can travel forwardly without striking a hard object, the steering wheel is also connected to a rigid steering column and thus will generally have very little "give". In frontal collisions, drivers often sustain chest injuries through striking against the vehicle's steering wheel.

It is an object of the present invention to seek to ameliorate the above difficulties.

Accordingly, one aspect of the present invention provides a steering column arrangement comprising: a housing; a steering column mounting arrangement, rotatably mounted with respect to the housing about a pivot axis; a grip arrangement; and an adjustment element having a first region which is formed around the pivot axis and is constrained to rotate with the steering column mounting arrangement, and a second portion which is gripped by the grip arrangement, there being a deformation arrangement provided between the first and second regions, which may deform to allow the first region to rotate about the rotation axis, without rotation of the second region.

Advantageously, the deformation arrangement comprises at least one member which extends between two points and which may extend during deformation.

Preferably, the member is initially not straight, and is completely or partially straightened out during deformation.

Conveniently, the member may stretch during deformation.

Advantageously, the deformation arrangement comprises at least one compression member which may be compressed during deformation.

Preferably, the grip arrangement comprises two grip elements, at least a part of the second region of the adjustment plate being received between the grip elements.

Conveniently, the second region of the adjustment plate may be selectively gripped by the gripping arrangement.

Advantageously, the selective gripping of the second region may be used to adjust the angle of the steering wheel with respect to the dashboard of the vehicle.

Preferably, during an impact having a severity greater than a predetermined severity, the second region of the adjustment plate may slide with respect to the gripping arrangement, with little or no deformation of the deformation arrangement, thus allowing the steering column arrangement to rotate with respect to the housing.

Conveniently, the second region of the adjustment plate may slide with respect to the gripping arrangement through the inertia of a steering wheel mounted on the steering column mounting arrangement.

Advantageously, during an impact having a severity greater than a predetermined severity, following impact of a driver of the vehicle against the steering wheel, the deformation arrangement may deform, allowing the steering column adjustment arrangement to rotate with respect to the housing.

Preferably, the steering column arrangement is attached to the adjustment plate by means of a catch member, which is attached to a protruding part of the adjustment plate.

Conveniently, a second deformation region is provided to allow the protruding part of the adjustment plate to deflect, thus allowing the steering column mounting arrangement to rotate with respect to the housing.

Advantageously, a weakened region is formed between the protruding part of the adjustment plate and adjacent part of the adjustment plate.

Another aspect of the present invention provides a vehicle comprising an arrangement according to any of the above, with a steering wheel attached to the steering column mounting arrangement.

In order that the present invention may be more readily understood, embodiments thereof will now be described, by way of example, with reference to the accompanying drawings, in which:
Figure 1 shows a steering column arrangement embodying the present invention during normal use;
Figures 2 to 4 show the arrangement of figure 1 during various stages of a head-on impact;
Figure 5 shows an alternative steering column arrangement; and
Figure 6 shows a close-up view of a component of the alternative steering column arrangement.

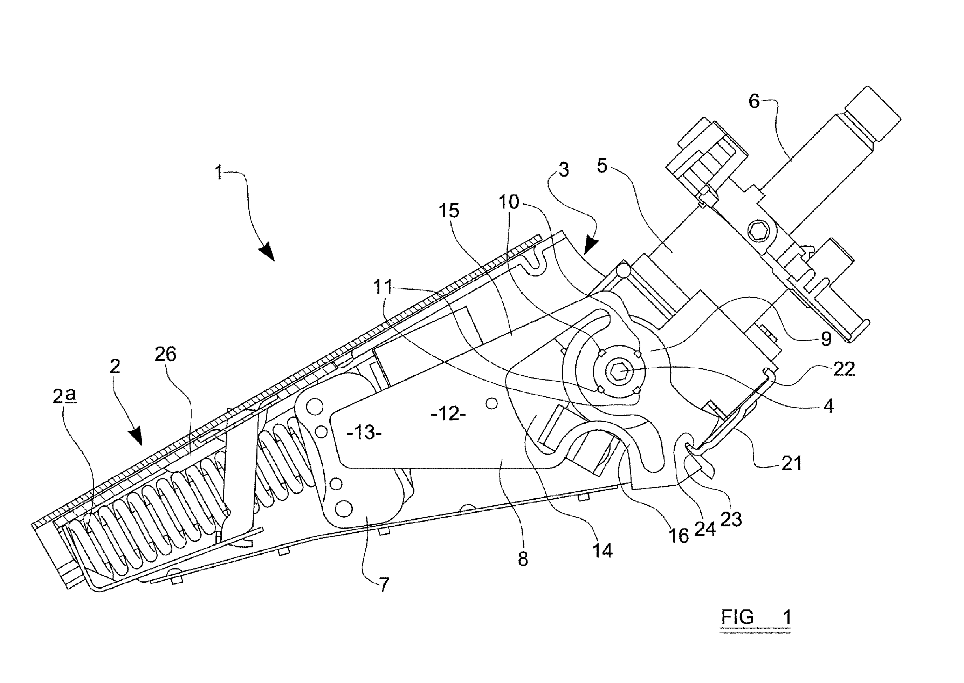

Referring firstly to figure 1, a cut-away view is shown of a steering column arrangement 1 embodying the present invention.

The steering column arrangement 1 has a housing 2, which is generally provided in two parts. A first part 2A is effectively fixed in place with respect to the vehicle's chassis. A second part 2B may slide inwardly and outwardly with respect to the first part, thus allowing the effective length of the steering column to be altered. The details of the housing are generally conventional and will not be discussed in detail in this specification.

The housing 2 has an open front end 3 through which the steering column protrudes, and becomes generally wider towards its front end.

Near the front end 3 of the housing 2, a main pivot axle 4 passes through suitable apertures (not shown) in the side walls of the housing 2. A steering column mounting arrangement 5 is also mounted on the main pivot axle 4. The steering column mounting arrangement 5 protrudes forwardly from the housing 2, and presents a mounting shaft 6 to which the vehicle's steering wheel (not shown) is mounted.

The steering column mounting arrangement 5 is preferably non-rotatably mounted on the main pivot axle 4. Under certain circumstances the main pivot axle 4 may, however, rotate with respect to the housing 2, as will be explained in greater detail below.

Provided within the housing is a pair of friction elements 7, only one of which is visible in figure 1. The friction elements 7 preferably comprise plates which are mounted in closely-spaced, generally parallel relation to one another. The friction elements preferably present relatively high-friction surfaces towards one another.

In preferred embodiments of the invention a clamping arrangement may be provided, to apply a clamping force 4 selectively to the clamping elements 7, to force the clamping element 7 towards one another. The skilled person will appreciate how this may be achieved and the exact nature of the clamping arrangement is not of crucial importance.

An adjustment plate 8 provides a connection between the steering column mounting assembly 5 and the housing 2. A first part 9 of the adjustment plate 8 is fixed non-rotatably around the main pivot axle 4. In preferred embodiments, the first part 9 comprises a plate-like region having a generally circular aperture therethrough, through which the main pivot axle 4 passes. The axle 4 and/or the aperture may be adapted to prevent relative rotation between these components, for instance (as shown in figure 1) a series of radial keys 10 provided on the exterior of the main pivot axle 4, which slot into corresponding keyways 11 provided in the first region 9 of the attachment plate 8.

A second region 12 of the attachment plate 8 extends towards, and is received between, the friction elements 7. The second region 12 generally tapers towards its free end 13, which is received between the friction elements 7, and may generally take the form of a truncated triangular plate-like region.

An aperture 14 is formed through the adjustment plate 8 between the first region 9 and the second region 12. First and second arms 15, 16 extend between the first and second regions 9, 12 on either side of the aperture 14. The first arm 15 is generally straight and is formed to have a relatively large thickness.

The second arm 16, however, is formed to be relatively thin, and is curved in shape. In the depicted embodiment, the second arm 16 describes a generally semicircular shape.

The adjustment plate 8 is preferably formed from a robust, sturdy material such as steel.

In normal use of the vehicle, the free end 13 of the second region 12 of the adjustment plate 8 is gripped between the friction elements 7. The frictional forces between the free end 13 and the friction elements 7 are sufficient to prevent movement of the adjustment plate 8 during normal operation of the vehicle.

A user of the vehicle may wish to adjust the angle at which the steering wheel protrudes from the dashboard. To do so, the user may disengage the clamping arrangement, so that the clamping force is completely or substantially removed from the clamping elements 7. The user will then be able to rotate the steering wheel (either clockwise or anticlockwise, in the orientation shown in figure 1) to the desired orientation. The user can then re-engage the clamping mechanism to clamp the steering wheel in place in its new position.

In preferred embodiments the steering column mounting arrangement 5 may be rotated within a range such that the axis thereof is around 32°C to 52° displaced from being vertical.

The operation of the arrangement 1 during a relatively severe frontal impact will now be described.

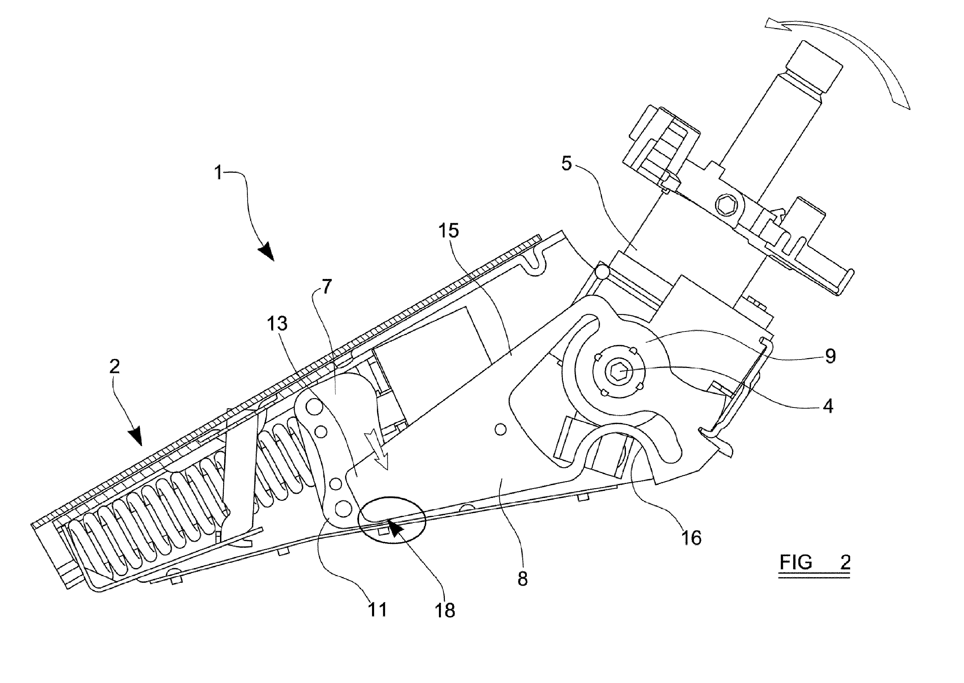

Figure 2 shows the operation during a first phase of the impact. As the vehicle strikes a further vehicle (or another object), the steering wheel will effectively be thrown forward with respect to the vehicle, through its own inertia. This will tend to cause the steering column mounting arrangement 5 to rotate with respect to the main pivot axle 4, and the effect of this will be for the steering wheel to tend to move forwardly and upwardly (i.e. towards the vehicle's front windscreen). This corresponds to an anticlockwise rotation of the steering column mounting arrangement 5, in the orientation shown in the figures.

The level of friction between the free end 13 of the second region 12 of the adjustment plate 8 and the clamping elements 7 is configured to be such that, during a relatively severe crash corresponding to an acceleration in the range between 20g to 40g, the free end 13 may slip between the friction plates 7 under the forces arising. The adjustment plate 8 will therefore rotate, with the free end 13 of its second region 12 sliding between the clamping elements 7 as this occurs. In preferred embodiments, for the free end 13 to slip in this way, frictional forces corresponding to a torque in the range between 200Nm to 350Nm must be overcome. It is expected that this will occur during a relatively severe impact when a steering wheel of a standard mass is used.

This first phase of motion comes to a halt when the adjustment plate 8 strikes a lower wall 17 of the housing 2, in the region indicated by reference numeral 18 in figure 2. In preferred embodiments, at this point the steering column mounting arrangement 5 will be at around 32° from being vertical.

It will be appreciated that the amount of rotation that occurs during this first phase will depend on the position in which the steering wheel had been placed prior to the impact. However, in preferred embodiments the rotation of the main axis of the steering column mounting arrangement is at least 5°, and in further embodiments the rotation is at least 10°.

The overall effect of this first phase of motion is that the steering wheel will be rotated towards the front of the vehicle as much as is generally allowed by the adjustment mechanism. This will place the maximum possible distance between the steering wheel and the driver of the vehicle.

The adjustment plate 8 does not deform, or does not deform significantly, during this first phase of motion.

A second phase of motion begins when the driver strikes the steering wheel, as he/she is thrown forwardly relative to the vehicle. This will place further, large forces on the steering column mounting arrangement 5, tending to rotate the steering column mounting arrangement 5 towards the front of the vehicle.

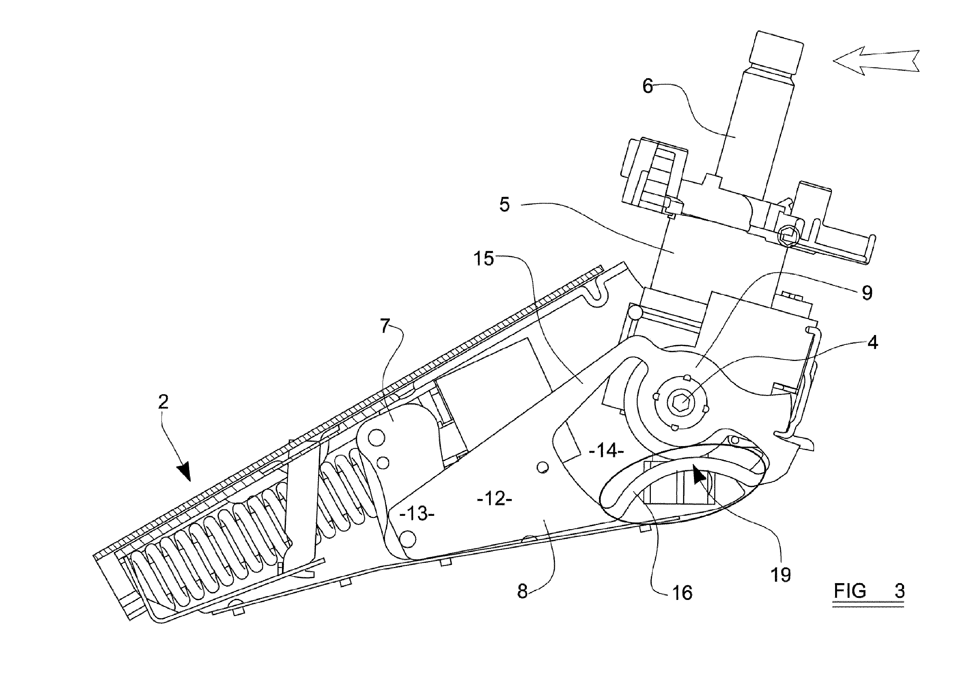

As this occurs, the curved second arm 16 deforms plastically, so that the curve of the second arm 16 effectively partially (or completely) straightens out. This is shown in the region indicated with reference numeral 19 in figure 3. It will be understood that this deformation of the second arm 16 allows the first region 9 of the adjustment element 8 to rotate, while the second region 12 remains effectively stationary in place. The main pivot axle 4 may therefore rotate with respect to the housing, thus allowing the steering column mounting arrangement 5 to rotate so that the steering wheel moves further towards the front of the vehicle. In preferred embodiments, for this to occur the driver must strike the steering wheel with a torque force of about 500Nm.

The ability of the steering column mounting arrangement 5 to rotate will allow the steering wheel to "give" as the occupant strikes the steering wheel. In addition, the deformation of the second arm 16 will absorb energy as the steering column mounting arrangement 5 rotates, thus decelerating the forward motion of the driver relatively gently, as compared to striking a fixed object.

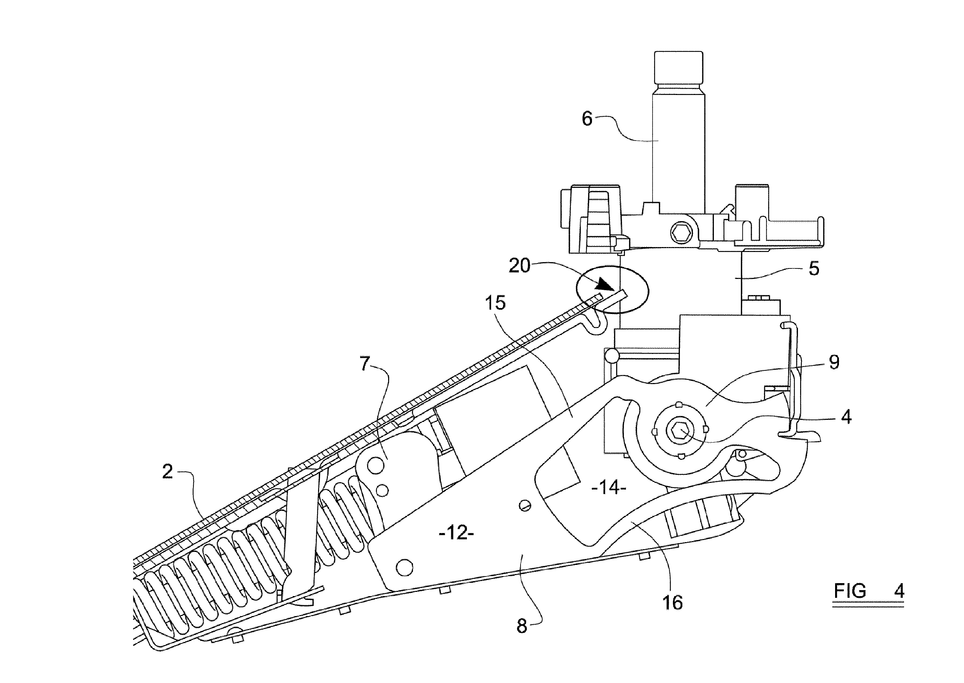

The second phase of motion is preferably brought to an end when a part of the steering column mounting assembly 5 contacts a forward edge of the housing 2 (or another object within the vehicle's cabin). In the arrangement shown in the figures, this occurs at the region indicated by reference numeral 20 in figure 4. At this point the axis of the steering column mounting arrangement 5 will preferably be substantially vertically oriented.

In preferred embodiments the main axis of the steering column mounting arrangement will rotate through at least 10° during the second phase of motion. More preferably the rotation will be at least 20%.

It will be understood that the arrangement shown in the figures allows two advantageous phases of motion that will occur during a frontal impact of sufficient severity. Firstly, the steering wheel will move, under the forces arising from the impact, to the safest position normally allowed by the adjustment mechanism prior to being struck by the occupant. Subsequently, once the occupant strikes the steering wheel, the steering wheel will move in response to the impact, slowing the driver's forward motion and absorbing the energy of the impact as it does so. These two movements are also achieved without any powered or active components.

One example of a deformation arrangement is shown in figures 1 to 4. However, many different types of deformation arrangement may be used. What is important is that the deformation arrangement may deform to allow the first region 9 of the adjustment plate 8, which is fixed around the main pivot axle 4, to pivot relative to the free end 13 of the second part 12, which is gripped between the clamping elements 7, and/or prevented from further movement through contact with the housing 2.

Various types of curved or shaped deformation elements may be used, in which the deformation element extends between two points via a route other than the shortest, straight route. As the deformation element deforms, the deformation element completely or partially straightens out. Deformation elements of this type may take any of a wide variety of forms. Other examples of deformation elements may involve elements which may stretch and increase in length, thus absorbing energy. For instance, a deformation element may comprise a relatively thin bar, and may also have perforations, notches or the like formed in its sides. Under the forces arising from an impact, the bar will be stretched, becoming longer and thinner while absorbing energy.

Deformation elements may also decrease in length during an impact. In the arrangement shown in figures 1 to 4, the first arm 15 that extends between the first and second regions 9, 12 of the adjustment plate 8 may be a compressible deformation element. An example of a compressible deformation element is a bar that is formed with a "zigzag" shape. Under the forces arising from an impact, the peaks of the zigzag may be forced closer together as the element deforms, absorbing energy.

Other types of suitable deformation arrangement will be apparent to the skilled person.

In preferred embodiments of the invention, an easy-entry mechanism may be provided. As shown in figure 1, the easy-entry mechanism comprises a catch 21, which is generally elongate and has protrusions 22, 23 at its first and second ends, which are arranged generally at right-angles to the main body of the catch 21.

The protrusion 22 at the first end of the catch 21 is pivotally fixed with respect to the steering column mounting arrangement 5. The protrusion 23 at the second end of the catch 21 is received in an indentation 24 formed in the first region 9 of the attachment plate 8. The catch 21 is arranged so that it may pivot around its first end so that the protrusion 23 at the second end is lifted out of the indentation 24.

When the protrusion 23 at the second end of the catch 21 is received in the indentation 24 in the attachment plate 8, the steering column mounting arrangement 5 is effectively locked in place with respect to the first portion 9 of the attachment plate 8, and thus effectively to the main pivot axle 4. However, when the catch 21 is rotated so that the protrusion 23 at its second end is lifted out at the indentation 24, the steering column mounting arrangement 5 may rotate relatively freely about the main pivot axle 4 with respect to the housing 2.

In certain circumstances it may be desired to rotate the steering wheel towards the front of the vehicle as far as possible, to allow the driver to access the driving seat easily. This may be necessary if the driver is tall, overweight, or otherwise large, and/or in certain vehicles such as agricultural vehicles or sports cars. When this is required, the catch 21 may be disengaged, and the steering column mounting arrangement 5 may then be rotated freely to the forward end of its range of motion. When the driver is safely installed in the driving seat, the steering wheel may be rotated back towards a normal driving position, and the protrusion 23 at the second end of the catch 21 will slot into the indentation 24, thus once again locking the steering wheel in place. Importantly, the steering wheel will be locked into the same position as was the case before the easy-entry mechanism was used.

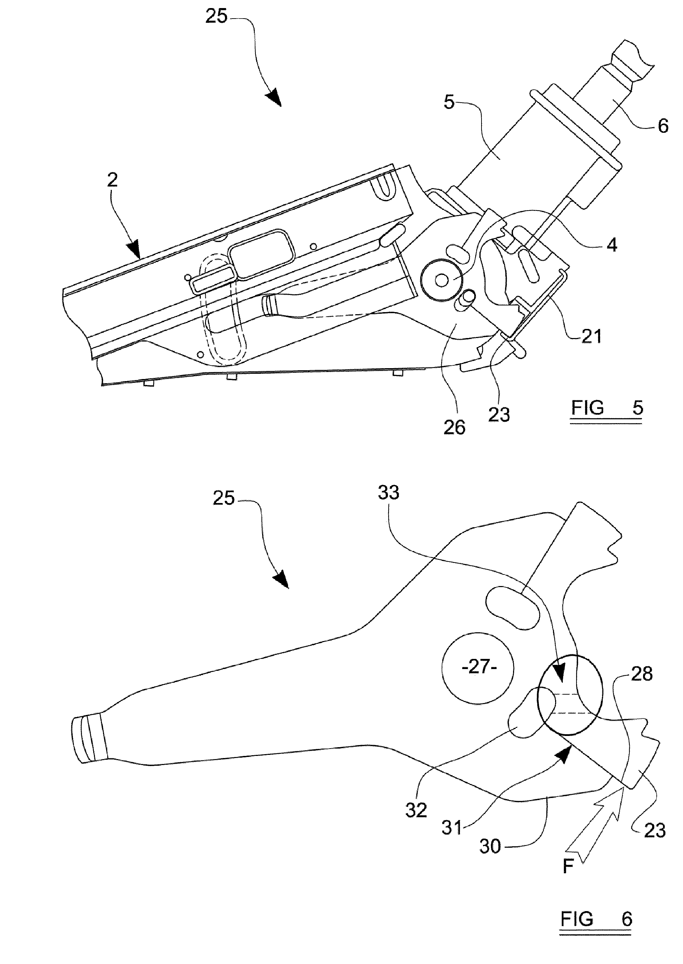

Turning to figure 5, a second steering column arrangement 25 is shown, which is broadly similar to the first steering column arrangement 1 shown in figures 1 to 4.

The second steering column arrangement 25 has an alternative adjustment plate 26, which is shown in greater detail in figure 6.

The adjustment plate 26 has an aperture 27 formed therethrough to receive the main pivot axle 4. In this embodiment no keys or keyways are provided to prevent rotation of the pivot axle 4 with respect to the adjustment plate 26.

A portion of the outer profile of the attachment plate 26 comprises a step 28, over which the protrusion 23 at the second end of the catch 21 may be hooked. The step 28 comprises adjacent first and second portions 29, 30 of the adjustment plate 26, with the first portion 29 protruding radially outwardly (with respect to the aperture 27) more than the second portion 30. The difference in radial protrusion between the first and second portions 29, 30 forms the step 28.

In the embodiment shown in figure 6, a slit 31 is formed in the adjustment plate 26 between the first and second portions 29, 30. In the illustrated embodiment, the slit 31 extends to a significant distance through the adjustment plate 26, and terminates in a secondary aperture 32 which is formed through the adjustment plate 26.

During a frontal impact situation, as described above, when the chest of the occupant strikes the steering wheel, the steering column mounting arrangement 5 will tend to rotate towards the front of the vehicle. This will cause the protrusion 23 formed at the second end of the catch 21 to apply a large force (indicated by the arrow F in figure 6) on the first portion 29 of the adjustment plate 26. This will cause a deformation region 33, in the vicinity of the secondary aperture 32, to deform and allow the first portion 29 to deflect, allowing the steering column mounting arrangement 5 to rotate, thus absorbing some of the energy of the driver's forward movement.

It is envisaged that this feature may allow extra movement of the steering wheel, in conjunction with a deformation arrangement as disclosed above.

In the arrangement shown in figures 5 and 6, the adjustment plate 26 is generally symmetrical. This facilitates the manufacture of the adjustment plate 26, as the same tools can be used to form both sides of the adjustment plate 26.

While there are some differences between the components of the first arrangement 1 shown in figures 1 to 4, and the second arrangement 25 shown in figures 5 and 6, it should be understood that these arrangements are compatible with one another and the features of these arrangements may be combined in any working manner.

In the description above, one adjustment plate 8 and two clamping elements 7 are mentioned. It should be understood, however, that a series of generally parallel mounting plates may be provided along with a series of generally parallel clamping elements, with the mounting plates being interleaved with the clamping elements so that each mounting plate is gripped between two clamping plates.

It will be understood that embodiments of the invention to provide a simple and robust mechanism for reducing the possibility of injury to the driver of a vehicle during a frontal impact.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A steering column arrangement comprising:
a housing;
a steering column mounting arrangement, rotatably mounted with respect to the housing about a pivot axis;
a grip arrangement; and
an adjustment element having a first region which is formed around the pivot axis and is constrained to rotate with the steering column mounting arrangement, and a second portion which is gripped by the grip arrangement, there being a deformation arrangement provided between the first and second regions, which may deform to allow the first region to rotate about the rotation axis, without rotation of the second region.

2. An arrangement according to claim 1, wherein the deformation arrangement comprises at least one member which extends between two points and which may extend during deformation.

3. An arrangement according to claim 2 wherein the member is initially not straight, and is completely or partially straightened out during deformation.

4. An arrangement according to claim 2 or 3 wherein the member may stretch during deformation.

5. An arrangement according to any preceding claim wherein the deformation arrangement comprises at least one compression member which may be compressed during deformation.

6. An arrangement according to any preceding claim, wherein the grip arrangement comprises two grip elements, at least a part of the second region of the adjustment plate being received between the grip elements.

7. An arrangement according to claim 5 or 6, wherein the second region of the adjustment plate may be selectively gripped by the gripping arrangement.

8. An arrangement according to claim 7, wherein the selective gripping of the second region may be used to adjust the angle of the steering wheel with respect to the dashboard of the vehicle.

9. An arrangement according to any preceding claim wherein, during an impact having a severity greater than a predetermined severity, the second region of the adjustment plate may slide with respect to the gripping arrangement, with little or no deformation of the deformation arrangement, thus allowing the steering column arrangement to rotate with respect to the housing.

10. An arrangement according to claim 9, wherein the second region of the adjustment plate may slide with respect to the gripping arrangement through the inertia of a steering wheel mounted on the steering column mounting arrangement.

11. An arrangement according to any preceding claim wherein, during an impact having a severity greater than a predetermined severity, following impact of a driver of the vehicle against the steering wheel, the deformation arrangement may deform, allowing the steering column adjustment arrangement to rotate with respect to the housing.

12. An arrangement according to any preceding claim, wherein the steering column arrangement is attached to the adjustment plate by means of a catch member, which is attached to a protruding part of the adjustment plate.

13. An arrangement according to claim 12, wherein a second deformation region is provided to allow the protruding part of the adjustment plate to deflect, thus allowing the steering column mounting arrangement to rotate with respect to the housing.

14. An arrangement according to claim 13, wherein a weakened region is formed between the protruding part of the adjustment plate and adjacent part of the adjustment plate.

15. A vehicle comprising an arrangement according to any preceding claim with a steering wheel attached to the steering column mounting arrangement.
